# EUROPEAN PATENT APPLICATION

(11) **EP 4 721 848 A1**
(43) Date of publication of application: **08.04.2026**
(21) Application number: 25202403.9
(22) Date of filing: 16.09.2025
(51) Int. Cl.: B01F 27/90, B01F 33/501, B01F 33/84, B01F 33/85, B01F 35/10, B01F 35/21, B01F 35/88, B01F 101/30

(54) **A SYSTEM AND METHOD FOR PRODUCING PAINTS IN BATCHES**

(30) Priority: 04.10.2024 IT 202400022062
(71) Applicant: Dromont S.p.A., 12060 Grinzane Cavour (CN) (IT)
(72) Inventor: DROCCO, Luca, I-12051 Alba (Cuneo) (IT)
(74) Representative: Buzzi, Notaro & Antonielli d'Oulx S.p.A.

(57) **Abstract**

A system (10) for producing paint batches, comprising:
- a plurality of mobile mixing units (12), each of which includes a mixing container (14) having at least one filling mouth (16),
- a handling system (30) configured to move the mobile mixing units (12) between a plurality of operational stations, and
- at least one mass dosing station (20) including a plurality of dosing valves (34) configured to simultaneously deliver dosed quantities of a plurality of product flows.

## Description

### Field of the invention

The present invention relates to the production of paints and similar products.

In particular, the invention concerns a system for high-speed production of finished products through fully automatic dosing and mixing of semi-finished products, additives, and colorants, in the exact quantity specified by a customer order and within very short timeframes.

The invention was specifically developed for producing frequent batches of medium and small sizes, for example with volumes ranging from 100 to 3000 liters.

According to another aspect, the invention relates to a method for producing paint batches.

### Prior art

The main components for paint production include binders or resins, which provide adhesion and durability; solvents and thinners, used to modify viscosity; additives, which can improve or impart specific properties; pigments, which provide color and coverage; and fillers, which can affect the texture and weight of the paint. These elements are combined in precise proportions to create different types of paints, each suited to specific applications and finishes.

The preparation of paint batches is a process that requires particular attention to ensure the quality of the final product. One critical aspect is the feeding of raw materials in proportions that accurately respect the formula.

The components are mixed in a mixing container, often under agitation to ensure a homogeneous blend. After mixing, the batch undergoes quality control to verify that the paint meets the required technical specifications.

Then, the finished paint is transferred from the mixing containers to distribution containers in which the paint is commercialized.

The mixing containers are then washed before being reused for the production of a new batch.

Current systems for preparing paint batches within mixing containers use gravimetric dosing, which involves weighing the mixing container during the introduction of raw materials and stopping the introduction when the quantity specified by the recipe is reached. This dosing system requires sequential feeding of the materials to be mixed.

An example of a sequential gravimetric dosing system is described in EP0715883B2 by the same applicant.

The main drawback of sequential gravimetric dosing is that each component to be mixed must be fed individually, which results in a long time to complete the dosing, especially when the recipe requires a high number of raw materials in large quantities.

### Object and summary of the invention

The object of the present invention is to provide a system for producing paint batches that overcomes the problems of the prior art.

According to the present invention, this object is achieved by a system having the features of claim 1.

According to another aspect, the invention relates to a method for preparing paint batches having the features of claim 9.

The claims form an integral part of the teaching provided in relation to the invention.

### Brief description of the drawings

The invention will now be described in detail with reference to the accompanying drawings, provided purely by way of non-limiting example, wherein:
- Figure 1 is a schematic plan view of a system for producing paint batches according to the present invention,
- Figures 2 and 3 are elevation and plan views of the mass dosing station indicated by arrow II in Figure 1,
- Figures 4 and 5 are elevation and plan views of a mobile mixing unit indicated by arrow IV in Figure 2, and
- Figures 6 and 7 are schematic front and side views of the part indicated by arrow VI in Figure 2.

It will be appreciated that the accompanying drawings are schematic and that in certain figures some components may not be illustrated to simplify the understanding of the figures. It will also be appreciated that various figures may not be drawn to the same scale.

### Detailed description

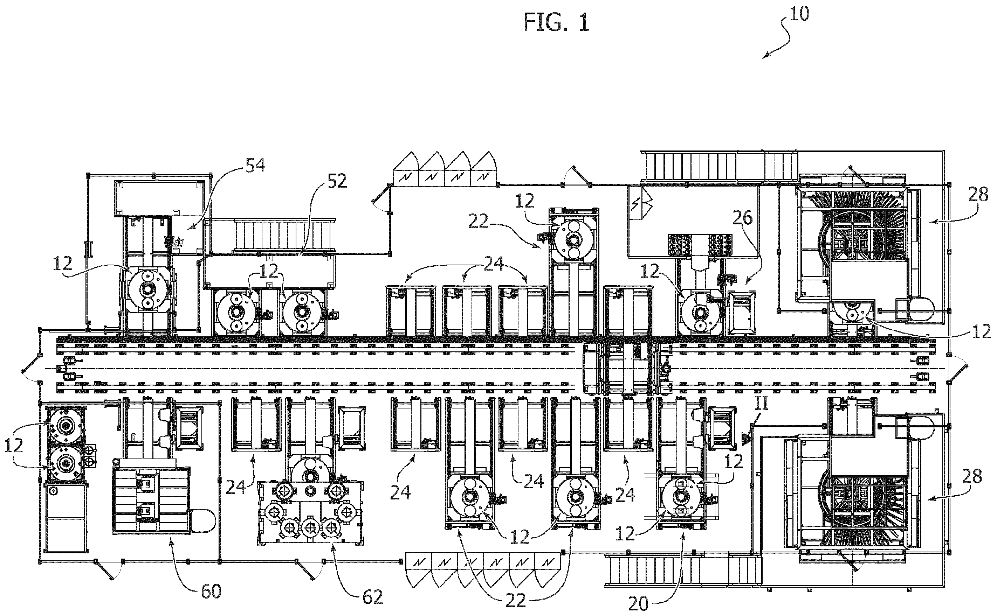

With reference to Figure 1, reference numeral 10 indicates a system for producing paint batches by mixing raw materials.

The system 10 comprises a plurality of mobile mixing units 12 and a plurality of operational stations, each configured to receive a mobile mixing unit 12.

The system 10 includes a handling system 30 configured to move the mobile mixing units 12 between said operational stations.

The handling system 30 may include:
- lanes for moving the mobile mixing units 14 via forklifts,
- rails and chain conveyors for automatic movement of the mobile mixing units 14 via shuttles,
- lanes for automatic movement of the mobile mixing units 12 via AGV or LGV vehicles (Automatic Guided Vehicle / Laser Guided Vehicle).

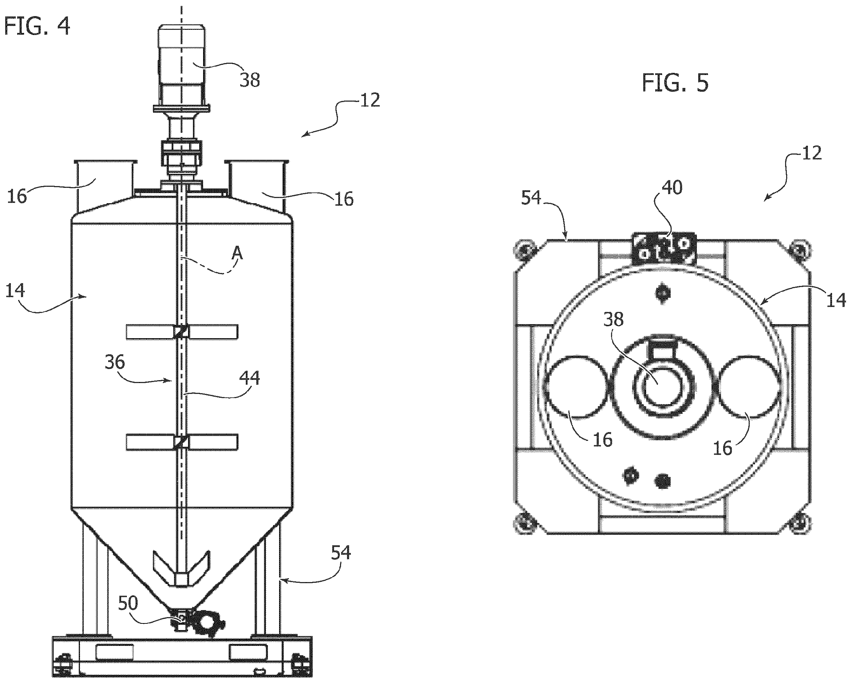

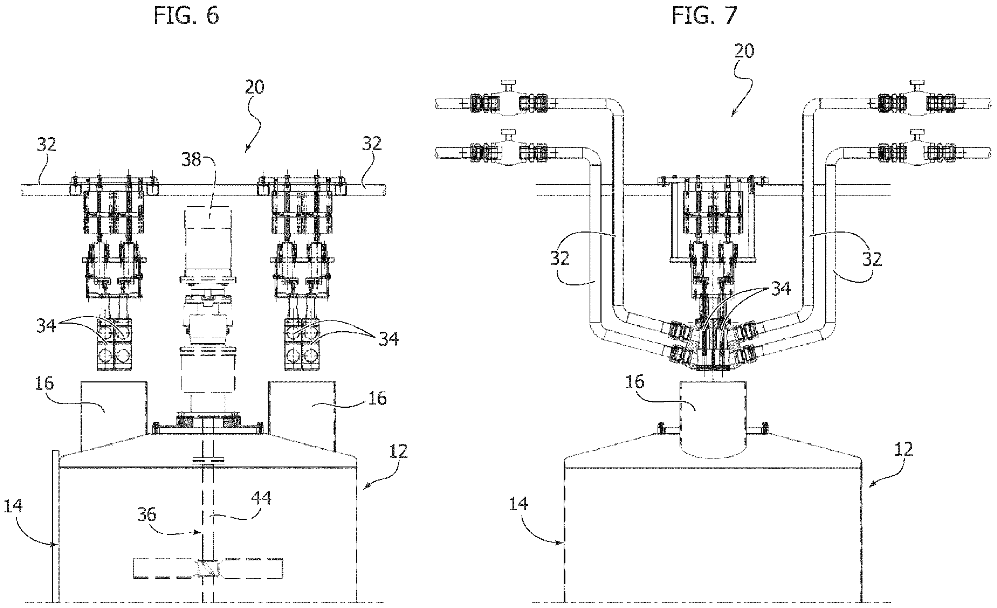

With particular reference to Figures 5 and 6, each of the mobile mixing units 12 includes a base structure 54 supporting a mixing container 14. The mixing container 14 may have a volume ranging from 500 to 3000 liters. The mixing container 14 has an upper wall in which at least one filling mouth 16 is formed. In the embodiments illustrated in the drawings, the mixing container 14 has two filling mouths 16 located in diametrically opposite positions relative to a central vertical axis A of the mixing container 14. The filling mouths 16 are closed by respective removable lids 48.

Each of the mobile mixing units 12 includes a rotatable mixing element 36 extending inside the mixing container 14. Each of the mobile mixing units 12 includes a motor 38 configured to drive the rotatable mixing element 36 in rotation. The rotatable mixing element 36 includes a vertical shaft 44 rotatable about the central vertical axis A of the mixing container 14.

Each of the mobile mixing units 12 includes a first electrical connector 40 electrically connected to the motor 38 and intended to connect with stationary electrical connectors located in one or more of the operational stations and connected to a stationary electrical network.

Each of the mobile mixing units 12 further includes a discharge valve 50 located at a lower end of the respective mixing container 14.

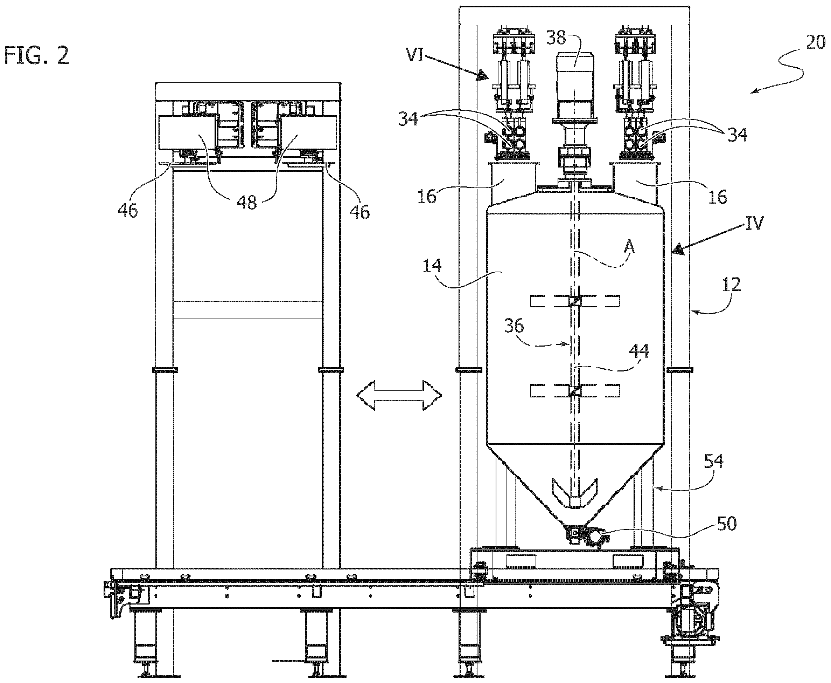

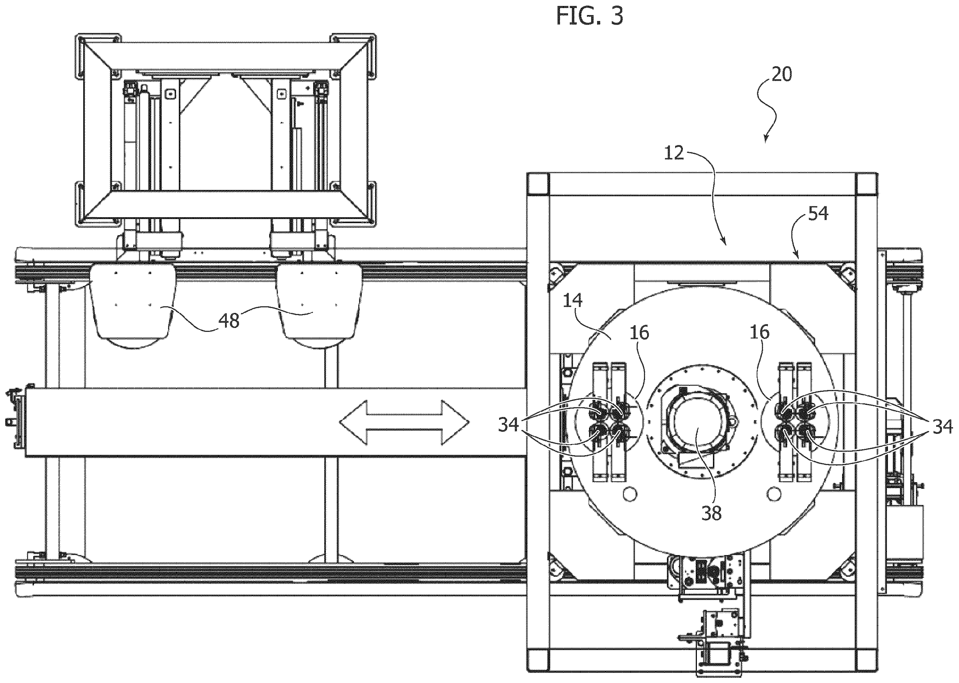

With reference to Figures 1-3, the system 10 includes a mass dosing station 20. The mass dosing station 20 includes a plurality of dosing valves 34 associated with respective feed pipes 32 and facing the filling mouths 16 of a mobile mixing unit 12 located in the mass dosing station 20.

The dosing valves 34 are configured to simultaneously deliver a plurality of product flows. The quantities of products delivered into the mixing container 14 are dosed by the respective dosing valves 34. Each of the dosing valves 34 is a non-throttling three-way valve, which at rest allows the liquid to recirculate in a tank. Under delivery conditions, each of the dosing valves 34 closes the recirculation path and opens the dosing path. The reaction times for switching between recirculation/dosing are very fast (on the order of a few tenths of a second) to ensure dosing precision and repeatability. The incoming flow for each valve is measured by an appropriate flow meter selected based on the products, flow rates, and precision required by the process. This allows simultaneous dosing of the different bases that make up the paint, significantly reducing preparation times compared to traditional processes.

In one possible embodiment, the mass dosing station 20 may include four dosing valves 34 for each filling mouth 16, so the mass dosing station 20 is capable of simultaneously delivering up to eight dosed flows of different products. This allows a significant increase in the production speed of paint batches compared to a traditional production system with gravimetric dosing, which requires sequential delivery of different products to measure the quantity delivered of each product.

The dosing valves 34 may be three-way valves with a diameter of 2½". The system with eight dosing valves 34 may be capable of delivering a dosed flow with a rate exceeding 9 m³/h with an accuracy of about 1%.

The mass dosing station 20 comprises a second electrical connector 42 connected to the electrical network and configured to establish an electrical connection with the first electrical connector 40 of the mixing unit 12 located in the mass dosing station 20 so as to electrically power the motor 38 during dosing and perform product mixing during delivery.

The mass dosing station 20 includes a lid removal device 48 configured to remove the lids 48 from the filling mouths 16 of the mobile mixing unit 12 located in the mass dosing station 20.

The system 10 may comprise a gravimetric dosing station 28 configured for the sequential delivery of products into a mixing container 14, with product dosing performed based on the measured weight of a mobile mixing unit 12 located in the gravimetric dosing station 28.

The system 10 may comprise a volumetric dosing station 26 configured for the delivery of small quantities of product with high dosing precision.

The system 10 may comprise a quality control station 52 configured to receive one or more mobile mixing units 12 for performing sampling for quality control of the paint batches produced in the mixing containers 14.

The system 10 may comprise a plurality of parking stations 24 configured to receive respective mobile mixing units 12 held in waiting during subsequent preparation operations.

The system 10 may comprise a plurality of emptying stations 22, each of which may be provided with a hydraulic connector configured to establish a hydraulic connection with the discharge valve 50 of a mobile mixing unit 12 located in the emptying station 22. Each emptying station 22 is connected to one or more filling machines that use the paint batches produced in the mixing containers 14 for filling distribution containers.

The system may comprise a washing station 60 provided with means for washing the mixing container 14 of a mobile mixing unit 12 located in the washing station 60.

The system may comprise a powder dosing station 62 for the gravimetric dosing of solid products of varying granulometry inside a mobile mixing unit 12 located in the powder station 62.

Finally, the system may further comprise a maintenance station 54 for performing maintenance operations on the mobile mixing units 12.

The system previously described in operation implements a method for producing paint batches, comprising:
- providing a plurality of mobile mixing units 12, each of which includes a mixing container 14 having at least one filling mouth 16,
- providing a plurality of operational stations, each configured to receive a mixing unit 12, wherein at least one of said operational stations is a mass dosing station 20 including a plurality of dosing valves 34 associated with respective feed pipes 32 and facing said at least one filling mouth 16 of a mobile mixing unit 12 located in the mass dosing station 20,
- moving the mixing units 12 between the operational stations, and
- in the mass dosing station 20, simultaneously delivering into the mixing container 14 a plurality of product flows dosed via respective dosing valves 34.

The method may comprise mixing the products in the mixing container 14 by a rotatable mixing element 36 extending inside the mixing container 14 simultaneously with the simultaneous delivery of the product flows.

The system and method according to the present invention are optimal for producing frequent batches of medium and small sizes. The system 10 enables high-speed production of finished products through fully automatic dosing and mixing of semi-finished products, additives, and colorants, in the exact quantities specified by a customer order and within very short timeframes.

Naturally, construction details and embodiments may vary widely from what has been described and illustrated, without thereby departing from the scope of the present invention as defined in the claims that follow.

## Claims

1. A system (10) for producing paint batches, comprising:
- a plurality of mobile mixing units (12), each of which includes a mixing container (14) having at least one filling mouth (16),
- a plurality of operational stations, each configured to receive a mobile mixing unit (14),
- a handling system (30) configured to move said mobile mixing units (14) between said operational stations, and
- at least one mass dosing station (20) including a plurality of dosing valves (34) associated with respective feed pipes (32) and facing said at least one filling mouth (16) of a mobile mixing unit (12) located in the mass dosing station (20) and configured to simultaneously deliver dosed quantities of a plurality of product flows.

2. The system of claim 1, wherein each of said mobile mixing units (12) comprises a rotatable mixing element (36) extending inside the mixing container (14), a motor (38) configured to rotationally drive the rotatable mixing element (36), a first electrical connector (44) electrically connected to said motor (38), and wherein said at least one mass dosing station (20) comprises a second electrical connector (42) connected to a stationary electrical network and configured to establish an electrical connection with the first electrical connector (40) of a mixing unit (12) located in the mass dosing station (20).

3. The system of claim 2, wherein said rotatable mixing element (36) comprises a vertical shaft (44) rotatable about a central vertical axis (A) of the mixing container (14), and wherein the mixing container (14) comprises two filling mouths (16) located on an upper wall of the mixing container (14) in diametrically opposite positions relative to said central vertical axis (A).

4. The system of any of the preceding claims, wherein said mobile mixing units (12) are provided with respective removable lids (46) associated with respective filling mouths (16), and wherein said at least one mass dosing station (20) includes a lid removal device (48) configured to remove the lids (48) from the filling mouths (16) of the mobile mixing units (12).

5. The system of any of the preceding claims, comprising an emptying station (22) provided with a hydraulic connector configured to establish a hydraulic connection with a discharge valve (50) located at a lower end of a mixing container (14) of a mobile mixing unit (12) located in the emptying station (22).

6. The system of any of the preceding claims, comprising a washing station (60) provided with means for washing the mixing container (14) of a mobile mixing unit (12) located in the washing station (60).

7. The system of any of the preceding claims, comprising at least one parking station (24) configured to receive a mobile mixing unit (12).

8. The system of any of the preceding claims, comprising at least one gravimetric dosing station (28) configured for the sequential delivery of products into the mixing container in quantities dosed based on the measured weight of a mobile mixing unit (12) located in the gravimetric dosing station (28).

9. A method for producing paint batches, comprising:
- providing a plurality of mobile mixing units (12), each of which includes a mixing container (14) having at least one filling mouth (16),
- providing a plurality of operational stations, each configured to receive a mixing unit (12), wherein at least one of said operational stations is a mass dosing station (20) including a plurality of dosing valves (34) associated with respective feed pipes (32) and facing said at least one filling mouth (16) of a mobile mixing unit (12) located in the mass dosing station (20),
- moving said mixing units (12) between said operational stations, and
- in said mass dosing station (20), simultaneously delivering into said mixing container (14) a plurality of product flows dosed via respective dosing valves (34).

10. The method of claim 9, comprising mixing the products in said mixing container (14) by a rotatable mixing element (36) extending inside the mixing container (14), simultaneously with the simultaneous delivery of said product flows.
